# EUROPEAN PATENT SPECIFICATION

(11) **EP 2 180 572 B1**
(45) Date of publication and mention of the grant of the patent: **13.01.2016**
(21) Application number: 09150820.0
(22) Date of filing: 19.01.2009
(51) Int. Cl.: H02J 7/00, H02H 9/04, H02H 7/18

(54) **Circuitry protection arrangement**
Schaltkreisschutzanordnung
Agencement de protection de circuit

(30) Priority: 23.10.2008 US 107703 P
(43) Date of publication of application: 28.04.2010
(73) Proprietor: Optis Wireless Technology, LLC, Plano, TX 75025 (US)
(72) Inventor: Jonson, Martin, 212 28, Malmö (SE)
(74) Representative: Grünecker Patent- und Rechtsanwälte PartG mbB

(56) References cited:
- JP-A- H05 111 150
- US-A- 5 706 187
- US-A1- 2002 085 837
- US-A1- 2007 291 432
- US-A1- 2008 246 442

## Description

### Technical Field

The present invention relates generally to the field of protecting circuitry against over-powering.

### Background

A battery of a battery-powered device may commonly be charged by connecting the battery-powered device to an external power source. The voltage and current may be regulated during charging so that they match the battery and its status.

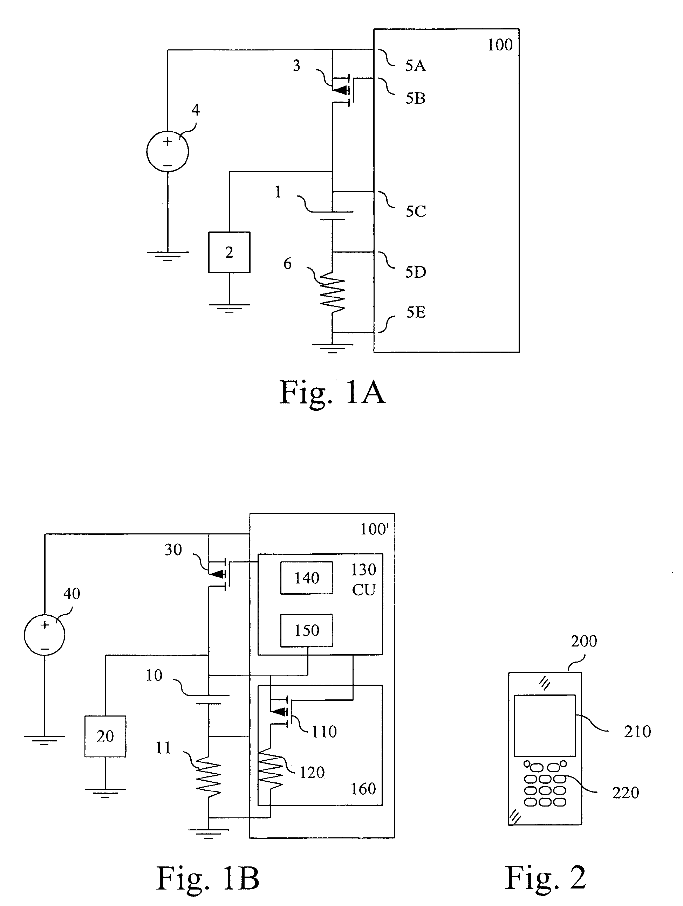

Figure 1A illustrates a simplified typical solution when the battery 1 of a battery-powered device is charged through the connection to an external power source 4. A control circuit 100 comprises an internal controller/regulator (not shown), which is adapted to regulate the voltage and current from the external power source during charging so that they match the battery and its status. The regulator may, for example, be provided on a chip. There may also be provided components, such as a transistor 3 and a resistor 6, external to the control circuit 100. Such components may or may not be regarded as comprised in the regulator and may be controlled by the regulator to regulate the voltage and/or current from the external power source. The control circuit 100 comprises inputs 5A, 5C, 5D, which are used for measuring (e.g. collecting measurements to be used in the regulation of the voltage and current from the external power source). The control circuit 100 also comprises an output 5B, which is used to control the operation of transistor 3. The input 5E is used for ground reference. Normally, the battery supplies several components and regulators, represented by circuitry 2, of the device. This circuitry may be sensitive to over-powering (e.g. over-voltage and/or over-current) exposure.

This and similar arrangements for battery charging experience a problem when the battery is disconnected during charging. This may happen if, for example, the device is dropped and the battery falls out. If the battery is disconnected during charging, the voltage at input 5C will increase. This will typically cause over-powering (e.g. over-voltage and/or over-current) of the circuitry 2. In many cases, batteries are charged with a fairly high current and a voltage close to the maximum voltage that the components inside the device (e.g. circuitry 2) are able to handle, which results in the problem being even more severe.

The ordinary charging regulator described above is not able to respond fast enough to the voltage change that occurs due to the disconnection of the battery. Thus, the charging regulator is not able to handle the load change due to the disconnection, and the circuitry 2 is at risk of becoming damaged by the over-powering. Thus, in order to not damage components of the circuitry 2, a special over-voltage (or over-power) protection circuitry is activated when the battery is disconnected. For example, it may be considered important to lower the amplitude and/or minimizing the pulse width for the over-powering (e.g. over-voltage and/or over-current). For example, it may be desirable that the control circuit 100 limits the current through transistor 3 very quickly to limit the voltage on the VBAT rail in the device. The VBAT rail is a notation describing the power rail connected to the battery (i.e. the junction to the left of input 5C in Figure 1A). An over-power protection circuitry typically turns off the charging (e.g. by turning off transistor 3). In addition it may be desirable trying to keep the voltage over the circuitry 2 at a predetermined, suitable level.

The control circuit 100 in Figure 1A thus comprises a regulator that controls the normal charging of the battery, and it may also comprise an over-power protection devised to set the transistor 3 to an off mode if an over-powering situation is detected, e.g. via measurements collected at the inputs 5A, 5C, 5D. This action may, for example, be performed to protect circuitry 2 of the battery-powered device from the over-power. Over-powering is understood to comprise situations with over-voltage as well as situations with over-current. Normally, regulation associated with the over-power protection consists of adjusting the current passing through the transistor 3 via output 5B.

US 2008/0246442 A1 and US 5825160 disclose over-voltage protection schemes for battery charging.

US 2008/0246442 A1 discloses a system and method for safely recharging a battery. A current source and a battery are coupled to a node. An overvoltage protection system is coupled between the node and the current source, and configured to disable the current source when a voltage at the node exceeds a threshold value.

US 5825160 discloses a power control circuit that includes an over-voltage detection circuit that detects whether a battery is connected to or disconnected from the system. A switching circuit responds to a control signal by disconnecting the voltage supplied through charging terminals when the battery is disconnected.

The response time when a transistor is turned off is fairly high. Thus, even if an over-power protection is applied that turns off the transistor 3 as quickly as possible, there will be an overshoot (of power/voltage/current) that all circuits attached to the VBAT rail (e.g. the circuitry 2) must be able to handle without being damaged. The solutions disclosed in US 2008/0246442 A1 and US 5825160 suffer from similar problems. This may force higher requirements on components, which may limit the number of standard components that can be used. The cost of the device may increase both due to higher component requirements and due to that the over-power protection has to be added.

Similar problems arise also in the more general situation of two power-consuming circuitries arranged in parallel and fed by the same power source. If one of the power-consuming circuitries is disconnected, there is a risk of damage to the other due to over-powering. The situation is especially severe if the disconnected circuitry is a heavy consumer of power. In the example above the two power-consuming circuitries comprise the battery 1 and the circuitry 2. In other examples, the disconnection of circuitry may comprise the event that a lamp is suddenly broken. Thus, the problem is not limited to the situation where a battery is being charged or the situation where a battery is disconnected during charging.

Another related problem is that circuits may be able to handle more over-power when they are not active. Therefore, some solutions turn off as much circuitry as possible (e.g. circuitry 2 in Figure 1A) in order to save them from being damaged when a disconnection event like the ones described above occur. This causes the disadvantage that the device may no longer be operable. Thus, such an approach is not practical in devices that need to be operable without interrupts.

As indicated above, one solution is to use (e.g. in circuitry 2 in Figure 1A) components that are more robust, which will impose higher costs since such components are generally more expensive. Another aspect in this regard is that components are more sensitive for smaller technologies (i.e. smaller size of silicon). Therefore, using components that are more robust also implies that small technologies cannot be used.

Another alternative solution is to use a Zener diode, DIAC (diode for alternating current) or similar in parallel with the circuitry that should be protected (e.g. circuitry 2 in Figure 1A). The diode may be implemented as a discrete component. Using this approach may be difficult since there is a requirement of matching between the control circuitry 100 and the diode. This requirement increases when there are small margins between the voltage required for charging and the maximum acceptable power supply voltage for the circuitry 2. Furthermore, these components are generally expensive. They also act more like fuses and are not programmable, neither for the turn-on nor for the turn-off.

Therefore, there is a need for improved circuitry protection arrangements that are able to reduce the over-power (e.g. amplitude and/or pulse width) experienced by circuitry arranged in parallel with other circuitry when the other circuitry is disconnected.

Background art of the interest is also disclosed in US 5,706,187, specifically power source circuitry having a DC power source and a switching circuit positioned at the primary side, a diode and a coil positioned at the secondary side and serially connected to a load, and a capacitor connected in parallel to the load. A current bypass circuit is connect in parallel to the load, and operates when a voltage applied to the load momentarily increases. When a current flowing through a load sharply decreases, the current bypass circuit conducts an abnormal current to be input to the load to the negative side. This suppresses the momentary increase in the voltage applied to the load. In a normal condition, no potential differences occur between the base and the emitter of a transistor, so that the transistor remains in an OFF state and prevents a current from flowing through the bypass circuit.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved circuitry protection arrangements.

The present invention provides a circuitry protection arrangement as set out in Claim 1, a device as set out in Claim 14 and, in accordance with Claim 18, the use of a circuitry protection arrangement. Optional features are set out in the remaining claims.

In some embodiments, setting the controllable connection to the first operation mode may reduce at least one of a pulse width and an amplitude of an over-voltage and/or over-current pulse experienced by the second power-consuming circuitry compared to if the circuitry protection arrangement according to the first aspect was not applied.

In some embodiments, the controllable connection may comprise an over-power protection switch.

In some embodiments, the power supply switch may have a response time that is longer than a response time of the controllable connection.

In some embodiments, the control circuitry may comprise detection circuitry adapted to detect the over-power situation of the second power-consuming circuitry. The detection circuitry may comprise voltage detection circuitry adapted to monitor a voltage over the second power-consuming circuitry, and the voltage detection circuitry may be adapted to detect the over-power situation of the second power-consuming circuitry when the voltage over the second power-consuming circuitry exceeds a first threshold. In some embodiments the control circuitry may be further adapted to set the controllable connection to the second operation mode when the voltage over the second power-consuming circuitry is below a second threshold.

In some embodiments, the control circuitry may be further adapted to set the controllable connection to the second operation mode when a predetermined period of time has elapsed from the detection of the over-power situation of the second power-consuming circuitry.

The first power-consuming circuitry may comprise a battery, and the first and second power-consuming circuitry may be connectable to the power source for charging of the battery.

In some embodiments, the controllable connection may be a connection between ground and a node connectable to the battery (e.g. the VBAT rail).

In some embodiments, the controllable connection may comprise a current limiter. The current limiter may be connected in series with the over-power protection switch. The current limiter may comprise a resistor. The current limiter may further comprise at least one of a capacitance and a diode, connected in parallel with the resistor.

In some embodiments, the controllable connection may consist of the over-power protection switch and the current limiter.

Another advantage of some embodiments of the invention is that the time during which an over-power is experienced is decreased.

Another advantage of some embodiments of the invention is that the amplitude of an experienced over-power is decreased.

Another advantage of some embodiments of the invention is that components used for the second circuitry arranged in parallel with the first circuitry may be cheaper.

Another advantage of some embodiments of the invention is that components used for the second circuitry arranged in parallel with the first circuitry may not need to satisfy excessively strict requirements. This may result in that more standard components are available for use in the second circuitry.

Another advantage of some embodiments of the invention is that the circuitry protection arrangement is simple to implement. It requires few additional components. This may also have the advantage that it is cheap to implement.

Yet another advantage of some embodiments of the invention is that the arrangement may be integrated on silicon. This may also have the advantage that it is cheap to implement.

An advantage of some embodiments of the invention is that it provides a programmable solution. The behavior of the arrangement may be controlled e.g. by logic and/or software.

Another advantage of some embodiments of the invention is that the arrangement is compatible with other over-power protection circuitry.

Yet another advantage of some embodiments of the invention is that there may no longer be a need to turn off the second circuitry arranged in parallel with the first circuitry to protect the second circuitry from over-powering.

### Brief Description of the Drawings

Further objects, features and advantages of the invention will appear from the following detailed description of embodiments of the invention, with reference being made to the accompanying drawings, in which:
Fig. 1A is a block diagram illustrating an example arrangement where a battery is charged from an external power source;
Fig. 1B is a block diagram illustrating an example arrangement according to some embodiments of the invention; and
Fig. 2 is a schematic drawing illustrating a mobile terminal, which may comprise an arrangement according to some embodiments of the invention.

### Detailed Description of Embodiments

As mentioned above, over-powering is understood to comprise situations with over-voltage as well as situations with over-current. In the following, reference will only be made to over-voltage situations, but embodiments of the invention are equally applicable to over-current (and other over-powering situations). Furthermore, reference will be made in the following to the situation of disconnection of a battery of a battery-powered device during charging, but embodiments of the invention are equally applicable to other situations where two power-consuming circuitries arranged in parallel are fed by the same power source and one of the power-consuming circuitries is disconnected, as explained above.

In the following, embodiments of the invention will be described where an arrangement is applied in a battery-powered device to reduce the amplitude and/or pulse width of an over-voltage pulse experienced if the battery is connected during charging.

Embodiments of the invention provide an improved over-voltage protection since VBAT is associated to ground in response to a detected over-voltage. In some embodiments, VBAT is associated or connected to ground in response to a detected over-voltage. In some embodiments, VBAT is connected to ground via a current limiter (e.g. a resistor) in response to a detected over-voltage. Thus, embodiments of the invention comprise a controllable connection between the VBAT rail and ground.

Arrangements according to embodiments of the invention may also comprise circuitry configured to detect a voltage level at VBAT. If such circuitry detects over-voltage (e.g. a voltage that exceeds a first over-voltage threshold), embodiments of the invention may, in response thereto, connect VBAT to ground through the controllable connection. In some embodiments, the controllable connection comprises a switch. The controllable connection may further comprise a current limiting device. According to some embodiments, the over-voltage arrangement is further adapted to disconnect VBAT from ground in response to an appropriate (and possibly predetermined) voltage level (e.g. a voltage level below a second over-voltage threshold). The first and second over-voltage thresholds may or may not have the same value.

Fig. 1B illustrates an example arrangement according to some embodiments of the invention. A battery 10 of a battery-powered device is charged through the connection to an external power source 40. A control circuit 100' comprises an internal controller/regulator (control unit - CU) 130, which is adapted to regulate the voltage and current from the external power source during charging so that they match the battery and its status as explained above. There are also provided a transistor 30 and a resistor 11, which are external to the control circuit 100'. These components may be integrated on a chip together with the control unit, or they may be implemented separately from the control unit. Furthermore, these components may or may not be regarded as comprised in the regulator and are controlled by the CU to regulate the voltage and current from the external power source. Circuitry 20 is arranged in parallel with the battery 10. This circuitry may be sensitive to over-powering (e.g. over-voltage and/or over-current) exposure as explained above.

The control circuit 100' thus comprises a control unit 130 that controls the normal charging of the battery. The regulator 130 also comprises an over-voltage protection functionality devised to set the transistor 30 to an off mode if an over-voltage situation is detected, thus disconnecting the power source 40, to protect circuitry 20 from the over-voltage.

In connection to the over-voltage protection being activated to disconnect the external power source 40 (e.g. by turning off the transistor 30), the over-voltage protection according to embodiments of the invention also associates a node connectable to the battery (e.g. the VBAT rail, compare with node 5C of Figure 1A) to ground via a controllable connection 160. This controllable connection can be activated very quickly and thus counteracts the slower response time of turning off the transistor 30. By activating the controllable connection the maximum voltage that can be experienced by the circuitry 20 is decreased. Thus, the possible over-voltage over circuitry 20 is limited by the activation of the controllable connection. Therefore, a more robust over-voltage protection is achieved and the circuitry 20 is better protected.

The transistor 30 may be chosen to have a relatively long response time. This may be due to that it has to be able to manage fairly high power levels. A long response time may also be desirable to make the over-voltage protection part that disconnects the power source less sensitive to disturbances of the VBAT voltage, and avoid that the power source is disconnected when it is actually not necessary.

Without the controllable connection 160, the voltage over circuitry 20 (i.e. on the VBAT rail) would thus risk rising to levels that are potentially damaging to the circuitry 20 if the battery 10 is disconnected during charging before the transistor 30 is set to an off-state. The resulting high incoming current (to the circuitry 20) may, for example, charge capacitances of the circuitry 20 to levels so high that they may be detrimental. With the application of the controllable connection 160, however, a new route to ground is provided for (quickly) leading away at least part of the current from the circuitry 20 during the response time of transistor 30. This also leads to that the voltage over circuitry 20 is not increased quite as much, and that it is decreased to an appropriate level much faster.

The controllable connection 160 may, according to some embodiments, be implemented by setting a transistor 110 to an on-state as soon as an over-voltage situation is detected. The transistor 110 may either connect the circuitry directly to ground or it may be arranged in series with a current limiter. The current limiter may, for example, comprise a resistor 120. The current limiter may, alternatively, comprise a resistor arranged in parallel with either or both of a capacitor and a diode. Such a solution may be able to handle the initial current pulse more quickly. A current limiter may also be realized by controlling the opening of the transistor 110 between the two extreme on- and off-states. The current and power dissipation in transistor 110 may also be reduced by rapidly alternating between the on- and off-states or other techniques for controlling the current flow through a transistor.

The resistor 120 may be provided comprised in the control circuit 100' or externally from the control circuit 100'. In some embodiments, also the transistor 110 may be provided externally to the control circuit 100'. Such a solution may have the advantage that heat and current in a chip comprising the control circuit 100' is reduced.

It is desirable that the controllable connection 160 responds as quickly as possible to a detected over-voltage situation. In the example of Figure 1B, it is therefore desirable that the response time of the transistor 110 is less than the response time of transistor 30. Thereby, the over-voltage experienced by circuitry 20 in the time interval corresponding to the response time of transistor 30 may be effectively reduced. It is possible to have a transistor 110 with such short response time in the controllable connection because it does not have to manage the same power levels as the transistor 30. Therefore it does not need to be as large as the transistor 30 and consequently has a lower gate capacitance. If the transistor 110 is chosen as an N-channel transistor, the response time may be even further increased.

The transistor 110 may be turned off (thereby disconnecting circuitry 20 from ground) after a predetermined time has lapsed or when it is detected that the voltage has decreased below a predetermined level and is acceptable for powering the circuitry 20 without damaging it. Using one or both of these approaches, it is ensured that the voltage over the circuitry 20 does not drop unnecessarily to a level where the circuitry 20 becomes inoperable. That the voltage does not drop unnecessarily also has the advantage that it prevents the battery from being discharged if it is reconnected.

The control unit 130 may comprise a regulator 140 for regulating the voltage and current from the external power source 40 during charging so that they match the battery 10. The control unit 130 may also comprise a detector 150.

The detector 150 may be adapted to detect an over-voltage over the circuitry 20. The detector 150 may, for example, compare the voltage over circuitry 20 to one or more over-voltage thresholds, and determine that there is an over-voltage situation if the voltage over circuitry 20 exceeds a first over-voltage threshold. In response to the detector detecting an over-voltage situation, the control unit 130 may be adapted to turn off the transistor 30 and turn on the transistor 110, thus activating the controllable connection 160. The control unit may use the regulator 140 to control these tasks. There may be one regulator 140 as in illustrated Figure 1 B for controlling both the normal charging and the over-voltage actions, or there may be several regulators, each controlling one or more of the normal charging, turning off transistor 30 at over-voltage, and turning on transistor 110.

The control unit 130 (e.g. using the regulator 140) may further be adapted to control when the transistor 110 should be turned off again as explained above. A clock functionality may determine when the predetermined time has lapsed and the transistor 110 may be turned off accordingly. Alternatively or additionally, the detector 150 may compare the voltage over circuitry 20 to a reset threshold (e.g. a second over-voltage threshold as explained above), and determine that there is no longer an over-voltage situation if the voltage over circuitry 20 is below the reset threshold. The reset threshold may or may not be identical to the first over-voltage threshold. In response to the detector detecting that there is no longer an over-voltage situation, the control unit 130 (e.g. using the regulator 140) may be adapted to turn off the transistor 110, thus inactivating the controllable connection 160.

It should be noted that the transistors 30 and 110 may alternatively be realised by the use of other switching means, such as logic gates, optocouplers or thyristors (the latter would also require adequate surrounding components as is readily understood by the skilled person).

Furthermore, it should be noted that the transistors 30 and 110 do not have to be chosen as P-FET transistors as is shown in Figure 1B. In some embodiments, for example, one or both of the transistors 30 and 110 comprise N-FET transistors. Such embodiments require that the controlling of the transistors is adapted correspondingly as is easily recognised by the skilled person. As a further example, one or both of the transistors 30 and 110 may comprise bipolar NPN or PNP transistors.

It should also be noted that the transistor 30 may have other placements than what is shown in Figure 1B. For example, the transistor 30 may alternatively be placed between incoming minus and ground.

The invention may be embodied within an electronic apparatus comprising circuitry/logic according to any of the embodiments of the invention. The electronic apparatus may, for example, be a portable or handheld mobile radio communication equipment, a mobile radio terminal, a mobile telephone, a pager, a communicator, an electronic organizer, a smartphone, a computer, a notebook, a mobile gaming device, a camera or a (wrist) watch.

Figure 2 illustrates an example battery-powered mobile terminal 200. The mobile terminal may comprise a circuitry protection arrangement according to embodiments of the invention. The mobile terminal may comprise a battery (not shown), and circuitry arranged in parallel to the battery. Further, the mobile terminal may be connectable to an external power source for charging of the battery. The mobile terminal 200 may, for example, comprise an arrangement as described in connection to Figure 1B.

The mobile terminal 200 is illustrated as a mobile telephone in a schematic front view. This example mobile terminal comprises an internal antenna. Alternatively, the mobile terminal may have an antenna mounted on the housing of the apparatus. The mobile terminal may even comprise multiple antennas. The mobile terminal may further comprise a display 210, a keypad 220, a loudspeaker, and a microphone, which together provides a man-machine interface for operating the mobile terminal.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention has been described herein with reference to various embodiments. However, a person skilled in the art would recognize numerous variations to the described embodiments that would still fall within the scope of the invention. For example, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A circuitry protection arrangement connectable to first (10) and second (20) power-consuming circuitry, wherein the first (10) and second (20) power-consuming circuitry are arranged in parallel and are connectable to a power source (40), and adapted to protect the second power-consuming circuitry (20) from over-powering, the circuitry protection arrangement comprising:
a controllable connection (160) arranged to be connected in parallel with the first (10) and second (20) power-consuming circuitry when the circuitry protection arrangement is connected to the first (10) and second (20) power-consuming circuitry, the controllable connection (160) having at least first and second operation modes, wherein the first operation mode enables a current flow through the controllable connection (160), thereby achieving at least one of limiting a maximum voltage over the second power-consuming circuitry (20) and reducing a current flow through the second power-consuming circuitry (20), and the second operation mode disables the current flow through the controllable connection (160);
a power supply switch (30) having at least third and fourth operation modes, the third operation mode enabling power supply from the power source (40) to the first (10) and second (20) power-consuming circuitry and the fourth operation mode disabling power supply from the power source (40) to the first (10) and second (20) power-consuming circuitry; and
control circuitry (130) adapted to detect an over-power situation of the second power-consuming circuitry (20),
**characterised in that** the control circuitry (130) is adapted to set, in response to a detection of the over-power situation of the second power-consuming circuitry (20), the controllable connection (160) to the first operation mode and the power supply switch (30) to the fourth operation mode.

2. The circuitry protection arrangement of claim 1, wherein the controllable connection (160) comprises an over-power protection switch (110).

3. The circuitry protection arrangement of claim 1 or claim 2, wherein the control circuitry (130) comprises detection circuitry (150) adapted to detect the over-power situation of the second power-consuming circuitry (20).

4. The circuitry protection arrangement of claim 3, wherein the detection circuitry (150) comprises voltage detection circuitry adapted to monitor a voltage over the second power-consuming circuitry (20), and wherein the voltage detection circuitry is adapted to detect the over-power situation of the second power-consuming circuitry (20) when the voltage over the second power-consuming circuitry exceeds a first threshold.

5. The circuitry protection arrangement of claim 4, wherein the control circuitry (130) is further adapted to set the controllable connection (160) to the second operation mode when the voltage over the second power-consuming circuitry is below a second threshold.

6. The circuitry protection arrangement of any of claims 1 to 5, wherein the control circuitry (130) is further adapted to set the controllable connection (160) to the second operation mode when a predetermined period of time has elapsed from the detection of the over-power situation of the second power-consuming circuitry (20).

7. The circuitry protection arrangement of any of claims 1 to 6, wherein the first power-consuming circuitry (10) comprises a battery, and wherein the first (10) and second (20) power-consuming circuitry are connectable to the power source (40) for charging of the battery.

8. The circuitry protection arrangement of claim 7, wherein the controllable connection (160) is a connection between ground and a node connectable to the battery.

9. The circuitry protection arrangement of any of claims 1 to 8, wherein the controllable connection (160) comprises a current limiter.

10. The circuitry protection arrangement of claim 9 when dependent on claim 2, wherein the current limiter is connected in series with the over-power protection switch (110).

11. The circuitry protection arrangement of claim 9 when dependent on claim 2, or of claim 10, wherein the controllable connection (160) consists of the over-power protection switch (110) and the current limiter.

12. The circuitry protection arrangement of any of claims 9 to 11, wherein the current limiter comprises a resistor (120).

13. The circuitry protection arrangement of claim 12, wherein the current limiter further comprises, connected in parallel with the resistor (120), at least one of a capacitance and a diode.

14. A device comprising the circuitry protection arrangement of any of claims 1 to 13 and the first (10) and second (20) power-consuming circuitry.

15. The device of claim 14, wherein the device is a communication device (200).

16. The device of claim 14 or claim 15, wherein the device is a battery-powered device.

17. The device of claim 16, wherein the device is connectable to the power source for charging of the battery.

18. Use of the circuitry protection arrangement of any of claims 1 to 13 in a device according to claim 17 for protecting the second power-consuming circuitry (20) from over-powering when the battery is disconnected during charging.

## Patentansprüche

1. Schaltungs-Schutzanordnung, die mit einer ersten (10) und einer zweiten (20) Energie verbrauchenden Schaltung verbunden werden kann, wobei die erste (10) und die zweite (20) Energie verbrauchende Schaltung parallel angeordnet sind und mit einer Stromquelle (40) verbunden werden können, und die so eingerichtet ist, dass sie die zweite Energie verbrauchende Schaltung (20) vor Überlastung schützt, wobei die Schaltungs-Schutzanordnung umfasst:
eine steuerbare Verbindung (160), die so eingerichtet ist, dass sie parallel mit der ersten (10) und der zweiten (20) Energie verbrauchenden Schaltung verbunden wird, wenn die Schaltungs-Schutzanordnung mit der ersten (10) und der zweiten (20) Energie verbrauchenden Schaltung verbunden wird, wobei die steuerbare Verbindung (160) wenigstens eine erste und eine zweite Betriebsart hat, in der ersten Betriebsart ein Stromfluss durch die steuerbare Verbindung (160) aktiviert wird und so Begrenzen einer maximalen Spannung über die zweite Energie verbrauchende Schaltung (20) oder/und Reduzieren eines Stromflusses durch die zweite Energie verbrauchende Schaltung (20) erreicht wird/werden, und in der zweiten Betriebsart der Stromfluss durch die steuerbare Verbindung (160) deaktiviert wird;
einen Energiezufuhr-Schalter (30), der wenigstens eine dritte und eine vierte Betriebsart hat, wobei in der dritten Betriebsart Energiezufuhr von der Energiequelle (40) zu der ersten (10) und der zweiten (20) Energie verbrauchenden Schaltung aktiviert wird und in der vierten Betriebsart Energiezufuhr von der Energiequelle (40) zu der ersten (10) und der zweiten (20) Energie verbrauchenden Schaltung deaktiviert wird; und
eine Steuerschaltung (130), die so eingerichtet ist, dass sie eine Überlastungssituation der zweiten Energie verbrauchenden Schaltung (20) erfasst,
**dadurch gekennzeichnet, dass** die Steuerschaltung (130) so eingerichtet ist, dass sie in Reaktion auf eine Erfassung der Überlastungssituation der zweiten Energie verbrauchenden Schaltung (20) die steuerbare Verbindung (160) in die erste Betriebsart versetzt und den Energiezufuhr-Schalter (30) in die vierte Betriebsart versetzt.

2. Schaltungs-Schutzanordnung nach Anspruch 1, wobei die steuerbare Verbindung (160) einen Überlastungs-Schutzschalter (110) umfasst.

3. Schaltungs-Schutzanordnung nach Anspruch 1 oder Anspruch 2, wobei die Steuerschaltung (130) eine Erfassungsschaltung (150) umfasst, die so eingerichtet ist, dass sie die Überlastungssituation der zweiten Energie verbrauchenden Schaltung (20) erfasst.

4. Schaltungs-Schutzanordnung nach Anspruch 3, wobei die Erfassungsschaltung (150) eine Spannungs-Erfassungsschaltung umfasst, die so eingerichtet ist, dass sie eine Spannung über die zweite Energie verbrauchende Schaltung (20) überwacht, und die Spannungs-Erfassungsschaltung so eingerichtet ist, dass sie die Überlastungssituation der zweiten Energie verbrauchenden Schaltung (20) erfasst, wenn die Spannung über die zweite Energie verbrauchende Schaltung einen ersten Schwellenwert übersteigt.

5. Schaltungs-Schutzanordnung nach Anspruch 4, wobei die Steuerschaltung (130) des Weiteren so eingerichtet ist, dass sie die steuerbare Verbindung (160) in die zweite Betriebsart versetzt, wenn die Spannung über die zweite Energie verbrauchende Schaltung unterhalb eines zweiten Schwellenwertes liegt.

6. Schaltungs-Schutzanordnung nach einem der Ansprüche 1 bis 5, wobei die Steuerschaltung (130) des Weiteren so eingerichtet ist, dass sie die steuerbare Verbindung (160) in die zweite Betriebsart versetzt, wenn ein vorgegebener Zeitraum seit der Erfassung der Überlastungssituation der zweiten Energie verbrauchenden Schaltung (20) verstrichen ist.

7. Schaltungs-Schutzanordnung nach einem der Ansprüche 1 bis 6, wobei die erste Energie verbrauchende Schaltung (10) eine Batterie umfasst und die erste (10) sowie die zweite (20) Energie verbrauchende Schaltung mit der Energiequelle (40) verbunden werden können, um die Batterie zu laden.

8. Schaltungs-Schutzanordnung nach Anspruch 7, wobei die steuerbare Verbindung (160) eine Verbindung zwischen Erde und einem Knoten ist, der mit der Batterie verbunden werden kann.

9. Schaltungs-Schutzanordnung nach einem der Ansprüche 1 bis 8, wobei die steuerbare Verbindung (160) einen Strombegrenzer umfasst.

10. Schaltungs-Schutzanordnung nach Anspruch 9, wenn abhängig von Anspruch 2, wobei der Strombegrenzer in Reihe mit dem Überlastungs-Schutzschalter (110) verbunden ist.

11. Schaltungs-Schutzanordnung nach Anspruch 9, wenn abhängig von Anspruch 2 oder von Anspruch 10, wobei die steuerbare Verbindung (160) aus dem Überlastungs-Schutzschalter (110) und dem Strombegrenzer besteht.

12. Schaltungs-Schutzanordnung nach einem der Ansprüche 9 bis 11, wobei der Strombegrenzer einen Widerstand (120) umfasst.

13. Schaltungs-Schutzanordnung nach Anspruch 12, wobei der Strombegrenzer des Weiteren eine Kapazität oder/und eine Diode umfasst, die parallel mit dem Widerstand (120) verbunden ist/sind.

14. Vorrichtung, die die Schaltungs-Schutzanordnung nach einem der Ansprüche 1 bis 13 sowie die erste (10) und die zweite (20) Energie verbrauchende Schaltung umfasst.

15. Vorrichtung nach Anspruch 14, wobei die Vorrichtung eine Kommunikationsvorrichtung (200) ist.

16. Vorrichtung nach Anspruch 14 oder Anspruch 15, wobei die Vorrichtung eine batteriebetriebene Vorrichtung ist.

17. Vorrichtung nach Anspruch 16, wobei die Vorrichtung zum Laden der Batterie mit der Energiequelle verbunden werden kann.

18. Einsatz der Schaltungs-Schutzanordnung nach einem der Ansprüche 1 bis 13 in einer Vorrichtung nach Anspruch 17, mit der die Energie verbrauchende Schaltung (20) gegen Überlastung geschützt wird, wenn die Batterie beim Laden getrennt wird.

## Revendications

1. Agencement de protection de circuits pouvant être connecté à des premiers (10) et seconds (20) circuits consommant de l'énergie, dans lequel les premiers (10) et seconds (20) circuits consommant de l'énergie sont agencés en parallèle et peuvent être connectés à une source d'alimentation (40), et adapté à protéger d'une surcharge les seconds circuits consommant de l'énergie (20), l'agencement de protection de circuits comprenant :
une connexion contrôlable (160) agencée pour être connectée en parallèle avec les premiers (10) et seconds (20) circuits consommant de l'énergie lorsque l'agencement de protection de circuits est connecté aux premiers (10) et seconds (20) circuits consommant de l'énergie, la connexion contrôlable (160) possédant au moins des premier et deuxième modes de fonctionnement, dans lequel le premier mode de fonctionnement permet à un courant de circuler à travers la connexion contrôlable (160) de façon à obtenir au moins une de la limitation de la tension maximale sur les seconds circuits consommant de l'énergie (20) et la diminution du courant circulant à travers les seconds circuits consommant de l'énergie (20), et le deuxième mode de fonctionnement désactive la circulation de courant à travers la connexion contrôlable (160) ;
un commutateur d'alimentation (30) possédant au moins des troisième et quatrième modes de fonctionnement, le troisième mode de fonctionnement permettant de fournir la source d'alimentation (40) aux premiers (10) et seconds (20) circuits consommant de l'énergie et le quatrième mode de fonctionnement désactivant la fourniture de la source d'alimentation (40) aux premiers (10) et seconds (20) circuits consommant de l'énergie ; et
des circuits de commande (130) adaptés à détecter une situation de surcharge des seconds circuits consommant de l'énergie (20),
**caractérisé en ce que**, en réponse à la détection de la situation de surcharge des seconds circuits consommant de l'énergie (20), les circuits de commande (130) sont adaptés à positionner la connexion contrôlable (160) dans le premier mode de fonctionnement et le commutateur d'alimentation (30) dans le quatrième mode de fonctionnement.

2. Agencement de protection de circuits selon la revendication 1, dans lequel la connexion contrôlable (160) comprend un commutateur de protection contre les surcharges (110).

3. Agencement de protection de circuits selon la revendication 1 ou la revendication 2, dans lequel les circuits de commande (130) comprennent des circuits de détection (150) adaptés à détecter la situation de surcharge des seconds circuits consommant de l'énergie (20).

4. Agencement de protection de circuits selon la revendication 3, dans lequel les circuits de détection (150) comprennent des circuits de détection de tension adaptés à surveiller une tension sur les seconds circuits consommant de l'énergie (20), et dans lequel les circuits de détection de tension sont adaptés à détecter la situation de surcharge des seconds circuits consommant de l'énergie (20) lorsque la tension sur les seconds circuits consommant de l'énergie dépasse un premier seuil.

5. Agencement de protection de circuits selon la revendication 4, dans lequel les circuits de commande (130) sont adaptés en outre à positionner la connexion contrôlable (160) dans le deuxième mode de fonctionnement lorsque la tension sur les seconds circuits consommant de l'énergie est inférieure à un second seuil.

6. Agencement de protection de circuits selon l'une quelconque des revendications 1 à 5, dans lequel les circuits de commande (130) sont adaptés en outre à positionner la connexion contrôlable (160) dans le deuxième mode de fonctionnement lorsqu'une période de temps prédéterminée s'est écoulée depuis la détection de la situation de surcharge des seconds circuits consommant de l'énergie (20).

7. Agencement de protection de circuits selon l'une quelconque des revendications 1 à 6, dans lequel les premiers circuits consommant de l'énergie (10) comprennent une batterie et dans lequel les premiers (10) et seconds (20) circuits consommant de l'énergie peuvent être connectés à la source d'alimentation (40) pour charger la batterie.

8. Agencement de protection de circuits selon la revendication 7, dans lequel la connexion contrôlable (160) est une connexion entre la masse et un noeud pouvant être connecté à la batterie.

9. Agencement de protection de circuits selon l'une quelconque des revendications 1 à 8, dans lequel la connexion contrôlable (160) comprend un limiteur de courant.

10. Agencement de protection de circuits selon la revendication 9, lorsqu'elle dépend de la revendication 2, dans lequel le limiteur de courant est connecté en série avec le commutateur de protection contre les surcharges (110).

11. Agencement de protection de circuits selon la revendication 9, lorsqu'elle dépend de la revendication 2 ou de la revendication 10, dans lequel la connexion contrôlable (160) est constituée du commutateur de protection contre les surcharges (110) et du limiteur de courant.

12. Agencement de protection de circuits selon l'une quelconque des revendications 9 à 11, dans lequel le limiteur de courant comprend une résistance (120).

13. Agencement de protection de circuits selon la revendication 12, dans lequel le limiteur de courant comprend en outre, connecté en parallèle avec la résistance (120) au moins un d'un condensateur et d'une diode.

14. Dispositif comprenant l'agencement de protection de circuits selon l'une quelconque des revendications 1 à 13 et les premiers (10) et seconds (20) circuits consommant de l'énergie.

15. Dispositif selon la revendication 14, dans lequel le dispositif est un dispositif de communication (200).

16. Dispositif selon la revendication 14 ou la revendication 15, dans lequel le dispositif est un dispositif alimenté par batterie.

17. Dispositif selon la revendication 16, dans lequel le dispositif peut être connecté à la source d'alimentation pour charger la batterie.

18. Utilisation de l'agencement de protection de circuits selon l'une quelconque des revendications 1 à 13 dans un dispositif selon la revendication 17 pour protéger les seconds circuits consommant de l'énergie (20) d'une surcharge lorsque la batterie est déconnectée pendant la charge.
